Europäisches Patentamt

European Patent Office

Office européen des brevets

(19)

(11) Veröffentlichungsnummer: **0 003 047**
**B1**

(12)

# EUROPÄISCHE PATENTSCHRIFT

(45) Veröffentlichungstag der Patentschrift:
05.08.81

(51) Int. Cl.³: **C 08 L 77/00, C 08 K 3/32**

(21) Anmeldenummer: **78101844.5**

(22) Anmeldetag: **23.12.78**

(54) **Flammfeste Polyamidformmassen.**

(30) Priorität: **05.01.78 DE 2800467**

(43) Veröffentlichungstag der Anmeldung:
**25.07.79 Patentblatt 79/15**

(45) Bekanntmachung des Hinweises auf die Patenterteilung:
**05.08.81 Patentblatt 81/31**

(84) Benannte Vertragsstaaten:
**DE FR GB IT**

(56) Entgegenhaltungen:
**FR-A-2 224 511**
**FR-A-2 344 615**

(73) Patentinhaber: **BAYER AG, Zentralbereich Patente, Marken und Lizenzen, D-5090 Leverkusen 1, Bayerwerk (DE)**

(72) Erfinder: **Tacke, Peter, Dr., Brandenburger Strasse 12, D-4150 Krefeld (DE)**
Erfinder: **Neuray, Dieter, Dr., Buschstrasse 149, D-4150 Krefeld (DE)**
Erfinder: **Michael, Dietrich, Dr., Deswatinesstrasse 57, D-4150 Krefeld (DE)**

ACTORUM AG.

## Flammfeste Polyamidformmassen

Gegenstand der vorliegenden Erfindung sind selbstverlöschende Polyamidformmassen, die als Brandschutzmittel eine Kombination aus Phenol-Aldehyd-Harzen und Phosphorylnitrid [= $(PNO)_x$] bzw. Vorstufen des Phosphorylnitrid enthalten.

Als hochwirksame Brandschutzmittel für Polyamidformmassen werden heute im technischen Masstab, wie dem Fachmann bekannt, Halogenverbindungen zusammen mit synergistisch wirkenden Metallverbindungen oder pulverisierter roter Phosphor eingesetzt. Diese Brandschutzmittel und ihre Verwendung sind beispielsweise im US-Patent 3 418 267, in der DAS 1 694 494, der DOS 2 544 219 und der DAS 1 931 387 beschrieben.

Gemäss den Lehren des Standes der Technik sind aber für unverstärkte und ungefüllte Polyamide die Halogenverbindungen nur wenig und der rote Phosphor überhaupt nicht als Brandschutzmittel wirksam.

Halogenverbindungen senken die Kriechstromfestigkeit der PA-Formmassen. Ferner bildet sich im Brandfalle Halogenwasserstoff, der in der Umgebung des Brandherdes erhebliche Korrosionen verursachen kann. Halogenverbindungen enthaltende Formmassen spalten in geringem Masse auch bereits bei den für die Verarbeitung erforderlichen hohen Temperaturen in den Verarbeitungsmaschinen Halogenwasserstoff ab, der die Maschinen schädigt.

Der pulverförmige rote Phosphor lässt sich nur schwierig handhaben, da er in Gegenwart von Luft bei Kontakt mit heissen Metallflächen, unter Bedingungen, die bei den üblichen Herstellungs- und Verarbeitungsmaschinen der Formmassen meistens gegeben sind, zu Staubexplosionen neigt.

Nachteilig ist weiterhin die leichte Entwicklung von giftigen Phosphor-Wasserstoff-Verbindungen, die bei den hohen Verarbeitungstemperaturen der Formmassen durch Reaktion des Phosphors mit Polyamiden stattfindet. Zahlreiche zusätzliche Verfahrensschritte sind – wie sie beispielsweise in den DAS 2 308 104, 2 625 673, 2 625 691 und FR-A 2 344 615 beschrieben sind – empfohlen worden, um diese Entwicklung möglichst zu dämmen. So wird in der französischen Patentschrift 2 344 615 gelehrt, roten Phosphor in Phenolaldehydharzen einzuhüllen, um die Passivierung des roten Phosphors zu erreichen. Der Patentschrift ist nicht zu entnehmen, dass durch Zugabe von Phenolaldehydharzen der Anteil roter Phosphor in der Flammschutzmittelkombination bei gleicher Wirksamkeit gesenkt werden kann.

Schliesslich erschwert die rote Eigenfarbe des Phosphors die Einstellung heller Farbtöne bei den Formmassen. Die zur Überdeckung der roten Farbe notwendige Menge an Weisspigmenten führt zur Verschlechterung der mechanischen Eigenschaften.

Aus der DOS 2 150 484 ist die Verwendung von stickstoffhaltigen Verbindungen des Phosphors als Brandschutzmittel für glasfaserverstärkte PA-Formmassen bekannt. Es handelt sich um nahezu farblose, leicht handhabbare Produkte. Ihre Flammschutzwirkung bei Polyamid-Formmassen genügt aber selbst bei einem Gehalt von 15 Gew.-% nicht den heutigen strengen Brandschutzanforderungen. Sie entsprechen beispielsweise nicht der Brandklasse V1 bzw. V0 gemäss der Prüfnorm von Underwriters' Laboratories (UL) Subj. 94, für ASTM-Prüfstäbe von 1/16″ und 1/8″ Dicke. In den DOS 2 317 282 und 2 355 575 (FR-PS 2 224 511) wird die Herstellung von polymerem Phosphorylnitrid und seine Verwendung als Brandschutzmittel für unverstärkte Polyamidformmassen beschrieben. Man erreicht mit Phosphorylnitrid jedoch nicht das Brandverhalten V1 oder V0 gemäss UL, sondern nur V2. Diese Bedingungen erfüllen aber unverstärkte Polyamidformmassen bereits gemäss dem «Recognized Component Index» von UL ohne besondere Brandschutzausrüstung. Daher dürfte die Brandschutzwirkung von Phosphorylnitrid bei Polyamidformmassen als gering zu betrachten sein.

Um so überraschender war es daher, dass eine Kombination aus Phenol-Aldehyd-Harzen, die selbstbrennbare Harze darstellen, und kleinen Mengen von Phosphorylnitrid oder Vorstufen dieses Produktes eine hervorragende Wirksamkeit als Brandschutzmittel sowohl für verstärkte als auch unverstärkte Polyamidformmassen besitzen.

Mit den erfindungsgemässen Brandschutzmittelkombinationen werden ausserdem, da alle Komponenten fast farblos bzw. weiss sind, Polyamidformmassen mit V0-Brandverhalten (nach UL) in hellen Farben zugänglich, die keine der für die Halogenverbindungen und den roten Phosphor angeführten Nachteile aufweisen.

Ein besonderer Vorteil der erfindungsgemässen Brandschutzmittelkombinationen ist darin zu sehen, dass das günstige Brandverhalten schon mit kleinen Mengen, beispielsweise mit 2–5 Gew.-% (bezogen auf die gesamte Formmasse) der Phosphor-Stickstoff-Verbindungen erreicht wird.

Wie bereits erwähnt, ergeben nicht nur Phosphorylnitrid zusammen mit Aldehyd-Phenol-Kondensationsharzen eine wirksame Flammschutzmittelkombination, sondern auch die Vorprodukte, die man durch Erhitzen der Ausgangsverbindungen auf nur 330–350 °C statt ca. 800 °C erhält. Als Ausgangsverbindungen werden vorzugsweise die Phosphorsäuren wie Phosphorsäure, phosphorige Säure oder Metaphosphorsäure, deren Amide oder Phosphorpentoxid und Harnstoff bzw. Pyrolyseprodukte des Harnstoffs wie Melamin eingesetzt.

Gegenstand der Erfindung sind daher selbstverlöschende thermoplastische Polyamidformmassen, bestehend aus.

1) 40–95, vorzugsweise 50–85 Gew.-% wenigstens eines Polyamids,

2) 0,2–12, vorzugsweise 1–6 Gew.-% von polymerem Phosphorylnitrid und/oder Vorstufen von Phosphorylnitrid, die die Zusammensetzung:

a) $P = 20–50,8$ Gew.-%
b) $N = 15–23$ Gew.-%
c) $O = 45–26,2$ Gew.-%
d) $C = 12–0$ Gew.-%
e) $H = 8–0$ Gew.-%

aufweisen, und

3) 0–50, vorzugsweise 0–35 Gew.-% Verstärkungs- und/oder Füllstoffen, die dadurch gekennzeichnet sind, dass die Formmassen,

4) 0,5–20, vorzugsweise 2–12 Gew.-% wenigstens eines Phenol-Aldehyd-Harzes enthalten, wobei die Summe aus 1)–4) bzw. a)–e), immer 100 Gew.-% beträgt.

Als Polyamide für die erfindungsgemässen Formmassen können eingesetzt werden: Polyamid-6, Polyamid-6,6, deren Gemische, Blockpolymere und Copolymere aus ε-Caprolactam, Adipinsäure, Hexamethylendiamin, weiterhin Polyamid-11 und -12 und Polyamide, die aus aliphatischen Diaminen und Adipinsäure und/oder Isophthalsäure und/oder Terephthalsäure und/oder Sebacinsäure und/oder Azelainsäure und/oder Cyclohexandicarbonsäure aufgebaut sind.

Als aliphatische Diamine sind ausser Hexamethylendiamin 2,2,4- und 2,4,4-Trimethyl-hexamethylendiamin, Isophorondiamin, 1,3- und 1,4-Bisaminocyclohexan, Bis-aminocyclohexyl-alkane und Xylylendiamin zu nennen.

Ausserdem kommen Polyamide in Betracht, die aus den genannten aliphatischen Dicarbonsäuren und aromatische Diaminen wie z.B. m- und p-Phenylendiamin hergestellt werden, sowie Polyamid-Gemische und Copolyamide aus allen genannten Komponenten, soweit aliphatische und teilaliphatische Polyamide entstehen. Besonders bevorzugt sind Polyamid-6 und Polyamid-6,6.

Als Phenol-Aldehyd-Kondensationsharze können vorzugsweise lineare Kondensationsharze, die im Bereich von –30 bis +350°C erweichen und durch Kondensation von Phenolen und Formaldehyd und/oder Acetaldehyd erhalten werden, verwendet werden.

Als phenolhaltige Verbindungen, aus denen die Harze hergestellt werden können, sind beispielsweise zu nennen: Phenole, n- und iso-Alkylphenole mit bis zu 8 C-Atomen in den Seitenketten, Naphthole, Hydroxydiphenyle, Hydroxydiphenyläther, Brenzcatechin, Resorcin, Hydrochinon, Bis-(hydroxyphenyl)-alkane und/oder -Cycloalkane mit jeweils bis zu 20 C-Atomen, Bis-(hydroxyphenyl)-sulfide, Bis-(hydroxyphenyl)-sulfone, Hydroxybenzoesäuren.

Die Phenol-Aldehyd-Harze werden nach bekannten Methoden hergestellt, wie sie beispielsweise in Houben-Weyl, Methoden der organischen Chemie, Band 14/2, 4. Auflage, S. 274 f. beschrieben sind.

Das Molverhältnis Aldehyd zur phenolischen Verbindung liegt in der Regel im Bereich 0,3:1– 1,2:1, vorzugsweise im Bereich 0,5:1–0,9:1. Vorzugsweise werden die durch saure Kondensation erhaltenen Novolake verwendet.

Zur Erhöhung der Schmelzviskosität kann das Phenol-Aldehyd-Harz mit Borsäure, Phosphorsäure, phosphoriger Säure, Estern der phosphorigen und Phosphorsäure, mehrwertigen Carbonsäuren, mehrfunktionellen Isocyanaten, mehrfunktionellen Epoxiden oder PCl₃ vernetzt werden. Bis zu 25 Gew.-% Vernetzungsmittel können dem Harz zugesetzt werden, vorzugsweise werden mehrfunktionelle Epoxide, Phosphorsäure und Borsäure verwendet.

Vorzugsweise sollte das Phenol-Aldehyd-Kondensationsharz eine Mindestviskosität von 200 Poise bei 20°C aufweisen.

Weiterhin kann die Überführung der Phenol-Aldehyd-Harze in Metallsalze von Vorteil sein, weil dadurch die Wirksamkeit der Brandschutzmittelkombination zumeist verbessert wird. Als Metalle zur Salzbildung kommen in Betracht: Alkali-, Erdalkalimetalle, Zink, Cadmium, Zinn, Blei, Antimon, Aluminium, Kupfer, Mangan, Eisen, Kobalt, Nickel. In den Harzen können eines oder mehrere der Metalle enthalten sein. Die Metallsalze können beispielsweise aus den Phenol-Aldehyd-Harzen und den Oxiden, Hydroxiden, Carbonaten, Acetaten, Formiaten, Phosphaten, Boraten der Metalle hergestellt werden. Bis zu 15 Gew.-% dieser Metallverbindungen, vorzugsweise der Oxide, können den Harzen zugesetzt werden.

Die Phenol-Aldehyd-Harze können auch auf die Polyamid-Komponente der erfindungsgemässen Formmassen gepfropft werden, wenn das Vernetzungsagens (beispielsweise ein Diepoxid) mit dem Harz noch nicht oder noch nicht vollständig reagiert hat und ausreichend reaktiv ist, um bei der Einarbeitung der Brandschutzmittel mit dem Polyamid reagieren zu können.

Die Herstellung von polymerem Phosphorylnitrid ist Stand der Technik und ist z.B. in den DOS 2317282 und 2355575 beschrieben. Auch in «Gmelins» Handbuch der anorg. Chemie, 8. Ausgabe, Band 16, C 1965, Seite 329 sind Herstellungsmethoden für polymeres Phosphorylnitrid beschrieben. Die erfindungsgemäss ebenso brauchbaren Vorstufen erhält man durch Erhitzen der Ausgangsverbindungen auf geringere Temperatur.

Die Einarbeitung der Brandschutzmittel erfolgt gegebenenfalls gemeinsam mit Verstärkungs- und Füllstoffen, Verarbeitungshilfsmitteln, Pigmenten, Farbstoffen und Stabilisatoren, vorzugsweise in handelsüblichen Doppelwellenextrudern. Es sind jedoch auch Einwellenextruder und Kneter verwendbar.

Verstärkungs- und Füllstoffe, Verarbeitungshilfsmittel, Pigmente, Farbstoffe und Stabilisatoren können in den üblichen, bekannten Mengen eingearbeitet werden.

Vorzugsweise sind u.a. die folgenden zu nennen: Glas-, Asbestfasern, Glaskugeln, Talkum, Wollastonit, Microvit, Kreide, Quarz, Russ, Cadmiumsulfid, Phthalocyanine, Salze der Stearinsäure, sterich gehinderte Phenole. Als Verstärkungsstoffe werden bevorzugt Fasern, insbesondere Glasfasern und als Füllstoffe Kreide, Microvit, Wollastonit, Quarz oder Talkum eingesetzt.

Die erfindungsgemässen Formmassen können auf handelsüblichen Spritzgiessmaschinen zu selbstverlöschenden, flammfesten Polyamid-Formteilen verarbeitet werden.

Beispiele

Das polymere Phosphorylnitrid wurde hergestellt nach DOS 2 355 575, Beispiel 1, wobei Melamin mit Phosphorpentaoxid innig vermischt und zunächst ca. 45 min. auf 600 °C steigend und dann eine ½ Stunde auf 600–650 °C erhitzt wird. Das Produkt stellt ein hellgraues Pulver dar. Die Elementaranalyse ergab folgende Werte:

|   | gefunden | berechnet |
|---|---|---|
| P | 50,53 | 50,8 |
| N | 22,85 | 23 |

Weiterhin wurden Harnstoff und $P_4O_{10}$ feingemahlen, im Molverhältnis 6:1 in einem Rollgefäss innig gemischt und 3 Stunden auf 340 °C erhitzt. Das nach dem Erkalten verbliebene hellgraue Produkt besass nach der Mahlung eine Durchschnittszusammensetzung von

P = 33,7%
N = 20,8%

C = 3,1%
H = 2,5%
O = 39,85%

Unter der Bezeichnung «Vorstufe» wurde dieses Produkt in weiteren Beispielen als Brandschutzmittel eingesetzt.

Die folgenden Phenol/Aldehyd-Harze wurden nach Houben-Weyl, Methoden der organischen Chemie, Band 14/2, 4. Auflage, Makromolekulare Stoffe II, S. 273 f, hergestellt:

A. Novolak aus Phenol und Formaldehyd, Erweichungsbereich 113–119 °C, Seite 273.

B. Novolak aus p-Phenyl-phenol und Formaldehyd, Erweichungsbereich 87–123 °C, Seite 274.

C. Novolak aus p-Kresol und Formaldehyd nach der Vorschrift von Versuch B, statt 945 g p-Phenyl-phenol jedoch 600 g p-Kresol eingesetzt, Erweichungsbereich 78–112 °C.

D. Novolak aus Resorcin und Formaldehyd, Erweichungsbereich 98–121 °C, Seite 274.

E. Novolak aus Phenol und Acetaldehyd, Erweichungsbereich 117–122 °C, Seite 275.

F. Resol aus Phenol und Formaldehyd, bei 20 °C hochviskoses Harz, Seite 278.

Die Harze A–F wurden, wie in Tabelle 1 angegeben, vernetzt bzw. in Metallsalze übergeführt. Nach dem Ausgiessen der fertiggestellten Harze auf Bleche erstarrten sie schnell zu spröden Produkten, die sich leicht auf Korndurchmesser von ca. 2–4 mm zerkleinern liessen. Die Vernetzungsbedingungen der Harze I–XII sind in Tabelle 1 angegeben.

Tabelle 1: Vernetzung der Phenol-Aldehyd-Harze bzw. Überführung in Metallsalze

|   | Harz | Zusatz | Gew.-% | Reaktionstemperatur (°C) | Reaktionszeit (h) |
|---|---|---|---|---|---|
| I | A | Diepoxid* | / 5 | 230 | 5 |
| II | A | Triäthylphosphat | / 3 | 180–230 | 5 |
| III | A | ZnO | / 1,5 | 230 | 4 |
| IV | A | Diepoxid* / 7 | // $ZnCO_3$/ 0,5 | 230 | 1 |
| V | A | Borsäure | / 1,1 | 240 | 3 |
| VI | A | $CaCo_3$ | / 1,3 | 250 | 3 |
| VII | B | Fe $Co_3$ | / 2 | 240 | 3 |
| VIII | C | Diepoxid* | / 3,5 | 230 | 5 |
| IX | C | $H_3PO_4$ | / 0,5 | 210 | 2,5 |
| X | D | Diepoxid* | / 2,4 | 230 | 5 |
| XI | E | Diepoxid* | / 4 | 230 | 5 |
| XII | F | Toluylendiisocyanat | / 3 | 200 | 1 |

* Diglycidyläther von 2,2-Bis-(4-hydroxyphenyl)-propan (Bisphenol A)

Beispiele 1–24

Die Einarbeitung der Phenol-Aldehyd-Harze und des polymeren Phosphorylnitrids bzw. der Vorstufe in die Polyamide erfolgte, ggf. gemeinsam mit Füll-, Verstärkungsstoffen, Pigmenten und Hilfsstoffen, in einem Einwellenextruder der Firma Reifenhäuser mit einem Schneckendurchmesser D von 30 mm und einer Schneckenlänge von 20 D.

Die Zusammensetzung, die Einarbeitungsbedingungen und das Brandverhalten der Mischungen sind aus Tabelle 2 ersichtlich.

Zur Prüfung des Brandverhaltens der Formmassen nach UL, Subj. 94, wurden ASTM-Prüfstäbe der Abmessungen ca. 1,5·12,5·127,5 und 3·12,5·127,5 mm gespritzt.

Die relative Viskosität $(\eta_{rel})$ der Polyamide wurde mit einer 1%igen Lösung in m-Kresol bei 23 °C gemessen.

Tabelle 2: Zusammensetzungen, Herstellbedingungen und Brandverhalten der PA-Mischungen

| Vers.-Nr. | Polyamid | Gew.-% in der Mischung | (PNO)$_x$ bzw. Vorstufe/ Gew.-% | Harz aus Vers.-Nr./ Gew.-% | Sonstige Zusätze Gew.-% | Masse-temp. °C | Brandverhalten nach UL, Subj. 94 Prüfstabdicke | |
|---|---|---|---|---|---|---|---|---|
| | | | | | | | 1,5 mm | 3 mm |
| 1 | PA-6,6 $\varepsilon$rel = 3,07 | 53 | (PNO)$_x$/12 | – | Glas-fasern/35 | 280 | brennt ab | brennt ab |
| 2 | PA-6,6 $\varepsilon$rel = 3,07 | 53 | Vorstufe/12 | – | Glas-fasern/35 | 280 | brennt ab | brennt ab |
| 3 | PA-6,6 $\varepsilon$rel = 3,07 | 88 | (PNO)$_x$/12 | – | – | 265 | V 2 | V 2 |
| 4 | PA-6,6 $\varepsilon$rel = 3,07 | 88 | Vorstufe/12 | – | – | 265 | V 2 | V 2 |
| 5 | wie 1 | 53 | – | A/12 | Glas-fasern/35 | 280 | brennt ab | brennt ab |
| 6 | wie 1 | 53 | – | I/12 | Glas-fasern/35 | 280 | brennt ab | brennt ab |
| 7 | wie 3 | 88 | – | I/12 | – | 265 | brennt ab | brennt ab |
| 8 | wie 1 | 55 | (PNO)$_x$/4 | I/6 | Glas-fasern/35 | 280 | V0 | V0 |
| 9 | wie 1 | 55 | Vorstufe/4 | I/6 | Glas-fasern/35 | 280 | V0 | V0 |
| 10 | wie 3 | 90 | (PNO)$_x$/4 | I/6 | – | 265 | V0 | V0 |
| 11 | wie 3 | 90 | Vorstufe/4 | I/6 | – | 265 | V0 | V0 |
| 12 | PA-6/ $\varepsilon$rel 2,97 | 60 | Vorstufe/4 | II/6 | Glas-fasern/30 | 265 | V1 | V0 |
| 13 | PA-6/ $\varepsilon$rel 2,97 | 61 | Vorstufe/3 | III/6 | Wolla- | 260 | V1 | V1 |
| 14 | Gemisch aus je 50% wie 3+12 | 90 | Vorstufe/4 | IV/6 | – | 270 | V0 | V0 |
| 15 | Gemisch aus je 50% wie 3+12 | 80 | Vorstufe/4 | V/6 | Talkum/10 | 280 | V0 | V0 |
| 16 | PA aus Isoph-thalsäure u. Hexamethy-len-diamin, $\varepsilon$rel = 2,64 | 90 | Vorstufe/4 | VI/6 | – | 265 | V0 | V0 |
| 17 | Pa-6,6/ $\varepsilon$rel = 3,94 | 90 | Vorstufe/4 | VII/6 | – | 285 | V0 | V0 |
| 18 | PA-6/ $\varepsilon$rel = 4,05 | 90 | Vorstufe/4 | VIII/6 | – | 265 | V0 | V0 |
| 19 | wie 3 | 90 | Vorstufe/4 | IX/6 | – | 285 | V0 | V0 |
| 20 | wie 3 | 90 | Vorstufe/4 | X/6 | – | 285 | V1 | V0 |
| 21 | wie 3 | 89 | Vorstufe/4 | XI/6 | TiO$_2$/1 | 285 | V0 | V0 |
| 22 | wie 3 | 90 | Vorstufe/4 | XII/6 | – | 285 | V1 | V1 |
| 23 | wie 3 | 89 | Vorstufe/4 | A/6 | TiO$_2$/1 | 285 | V1 | |
| 24 | we1 | 54 | Vorstufe/4 | I/6 | TiO$_2$/1 Glas-faser/35 | 285 | V0 | V0 |

Vergleichsversuche (Vers.-Nr. 1–24)

(PNO)$_x$ = polymeres Phosphorylnitrid

## Patentansprüche

1. Selbstverlöschende thermoplastische Polyamidformmassen bestehend aus:

1) 40–95 Gew.-% wenigstens eines Polyamids,

2) 0,2–12 Gew.-% polymeres Phosphorylnitrid und/oder Vorstufen von Phosphorylnitrid, die die Zusammensetzung

a) P = 20–50,8 Gew.-%

b) N = 15–23 Gew.-%

c) O = 45–26,2 Gew.-%
d) C = 12–0 Gew.-%
e) H = 8–0 Gew.-%
aufweisen, und
3) 0–50 Gew.-% Verstärkungs- und/oder Füllstoffe,
dadurch gekennzeichnet, dass die Formmassen
4) 0,5–20 Gew.-% wenigstens eines Phenol-Aldehyd-Kondensationsharzes enthalten.

2. Polyamidformmassen nach Anspruch 1, dadurch gekennzeichnet, dass das Phenol-Aldehyd-Kondensations-Harz bis zu 25 Gew.-% Vernetzungsmittel enthält.

3. Polyamidformmassen nach Ansprüchen 1 und 2, dadurch gekennzeichnet, dass das Phenol-Aldehyd-Kondensations-Harz als Metallsalz vorliegt.

4. Poylamidformmassen nach Ansprüchen 1–3, dadurch gekennzeichnet, dass als Verstärkungsstoffe Glasfasern verwendet werden.

5. Formmassen nach Ansprüchen 1–4, dadurch gekennzeichnet, dass sie 2–12 Gew.-% eines Phenol-Aldehyd-Kondensations-Harzes enthalten.

6. Formmassen nach Ansprüchen 1–5, dadurch gekennzeichnet, dass sie als Polyamide Polyamid-6 und/oder Polyamid-6,6 enthalten.

## Claims

1. Self-extinguishing thermoplastic polyamide moulding compositions consisting of:
1) 40–95% by weight of at least one polyamide,
2) 0.2–12% by weight of polymeric phosphoryl nitride and/or preliminary stages of phosphoryl nitride, which have the composition:
a) P = 20–50.8% by weight
b) N = 15–23% by weight
c) O = 45–26.2% by weight
d) C = 12–0% by weight
e) H = 8–0% by weight, and
3) 0–50% by weight of reinforcing materials and/or fillers,
characterised in that the moulding compositions contain
4) 0.5–20% by weight of at least one phenol/aldehyde condensation resin.

2. Polyamide moulding compositions according to claim 1, characterised in that the phenol/aldehyde condensation resin contains up to 25% by weight of cross-linking agents.

3. Polyamide moulding compositions according to claims 1 and 2, characterised in that the phenol/aldehyde condensation resin is in the form of a metal salt.

4. Polyamide moulding compositions according to claims 1–3, characterised in that glass fibres are used as reinforcing materials.

5. Moulding compositions according to claims 1–4, characterised in that they contain 2–12% by weight of a phenol/aldehyde condensation resin.

6. Moulding compositions according to claims 1–5, characterised in that they contain, as polyamides, polyamide-6 and/or polyamide-6,6.

## Revendications

1. Matières à mouler thermoplastiques auto-extinguibles en polyamide composées de:
1) 40–95% en poids d'au moins un polyamide,
2) 0,2–12% en poids de nitrure de phosphoryle polymérique et/ou de progéniteurs de nitrure de phosphoryle qui présentent la composition
a) P = 20–50,8% en poids
b) N = 15–23% en poids
c) O = 45–26,2% en poids
d) C = 12–0% en poids
e) H = 8–0% en poids, et
3) 0–50% en poids de matières de renforcement et/ou de charges, caractérisées en ce qu'elles renferment
4) 0,5–20% en poids d'au moins une résine de condensation phénol-aldéhyde.

2. Matières à mouler en polyamide suivant la revendication 1, caractérisées en ce que la résine de condensation phénol-aldéhyde contient jusqu'à 25% en poids d'un agent de réticulation.

3. Matières à mouler en polyamide suivant les revendications 1 et 2, caractérisées en ce que la résine de condensation phénol-formaldéhyde est présente sous la forme d'un sel métallique.

4. Matières à mouler en polyamide suivant les revendications 1 à 3, caractérisées en ce que des fibres de verre sont utilisées comme matières de renforcement.

5. Matières à mouler suivant les revendications 1 à 4, caractérisées en ce qu'elles contiennent 2 à 12% en poids d'une résine de condensation phénol-aldéhyde.

6. Matières à mouler suivant les revendications 1 à 5, caractérisées en ce qu'elles contiennent comme polyamides le polyamide-6 et/ou le polyamide-6,6.